# FASCICULE DE BREVET EUROPEEN

(11) **EP 0 757 999 B1**
(45) Date de publication et mention de la délivrance du brevet: **23.05.2001**
(21) Numéro de dépôt: 96401453.4
(22) Date de dépôt: 01.07.1996
(51) Int. Cl.: C08G 73/02, D21H 27/16, G03C 1/79

(54) **Procédé pour l'obtention de résines polyamidoamine-épichlorhydrine à teneur en dichloro-1,3-propanol-2 indécelable par les moyens ordinaires de chromatographie en phase vapeur**
Verfahren zur Herstellung von Polyamidoamin-Epichlorhydrin-Harzen mit einem Gehalt an 1,3-Dichlor-2-propanol, der mit dem Standardverfahren der Gaschromatographie nicht nachweisbar ist
Process for obtaining polyamidoamine-epichlorhydrin resins with undetectable contents of dichloro-1,3-propanol-2 by standard vapour chromatography means

(30) Priorité: 11.07.1995 FR 9508359
(43) Date de publication de la demande: 12.02.1997
(73) Titulaire: CECA S.A., 92800 Puteaux (FR)
(72) Inventeur: Laurent, Henri, 60200 Compiegne (FR); Dreyfus, Thierry, 60280 Margny les Compiegne (FR); Poulet, Chantal, 60138 Chiry Ourscamp (FR); Quillet, Serge, 78220 Viroflay (FR)
(74) Mandataire: Haicour, Philippe

(56) Documents cités:
- WO-A-93/21384
- DATABASE WPI Week 9405 Derwent Publications Ltd., London, GB; AN 94-041578 XP002013452 & SU-A-1 786 214 (LENGD CELLULOSE PAPER INST)
- DATABASE WPI Week 7811 Derwent Publications Ltd., London, GB; AN 78-20289a XP002013453 & JP-A-53 010 692 (TEIKOKU CHEM IND LTD)

## Description

La présente invention a trait aux additifs du type polyamidoamine-épichlorhydrine (PAE) utilisés pour développer la résistance humide du papier, et plus précisément à un perfectionnement pour en limiter l'impact sur l'environnement.

Le papier possède une résistance mécanique naturelle due à l'enchevêtrement de millions de fibres de "bois". Cette résistance à sec est due aux nombreuses liaisons hydrogène qui s'établissent au cours du séchage du papier. Au cours du processus d'évaporation de l'eau, les hydrogènes acides des fibres se rapprochent les uns des autres pour former des liaisons hydrogènes. En présence d'eau, la résistance mécanique de la feuille de papier s'estompe très rapidement au fur et à mesure de la disparition des liens hydrogènes interfibres : l'eau va progressivement désolidariser le réseau fibreux, en fragilisant les fibres elles-mêmes.

Pour consolider le matelas fibreux et empêcher partiellement l'eau d'atteindre les groupes hydroxyles des fibres, les chimistes ont proposé d'améliorer la résistance du papier entre autres par ajout de résines thermodurcissables, et plus particulièrement de résines thermodurcissables à caractère cationique, afin de faciliter leur adsorption sur les fibres qui sont douées d'un certain caractère anionique. Deux principaux systèmes se sont développés et concurrencés sur le marché : le premier utilise des résines aminoplastes (urée formol et mélamine formol), le second système développé dans les années 1960 fait intervenir une résine polyamide-polyamine-épichlorhydrine (PAE) utilisée en milieu neutre. Ce dernier procédé, en expansion depuis sa création, présente nombre d'avantages sur les résines aminoplastes utilisées en milieu acide (pH 4,5-5), par exemple celui de pouvoir utiliser des charges moins chères, telle que le carbonate de calcium et de moins corroder les installations industrielles. Elles ont un autre avantage sur les résines aminoplastes, celui de ne pas apporter de formol considéré comme un élément nocif. Ces résines PAE, du fait de leur procédé d'obtention qui met en oeuvre de l'épichlorhydrine (EPC), contiennent des produits organochlorés, et sont de ce fait soumises à la réglementation qui limite sévèrement l'émission dans l'environnement d'halogènes organiques adsorbables sur charbons actifs. Ce sont les produits que l'on nomme AOX, (mis pour "adsorbable organically halogens") et que l'on sait doser dans les eaux selon diverses normes (DIN 38409, SCAN-W9:89, ISO 9562).

Les résines PAE sont fabriquées industriellement en deux étapes. La première met en présence un acide dicarboxylique, l'acide adipique, et la diéthylènetriamine (DETA) que l'on condense à haute température. La résine polyamide polyamine (PA) ainsi formée réagit avec l'épichlorhydrine pour former la résine PAE, qui est un polymère de bas poids moléculaire susceptible d'être réticulé, et qui est stabilisé en milieu acide.

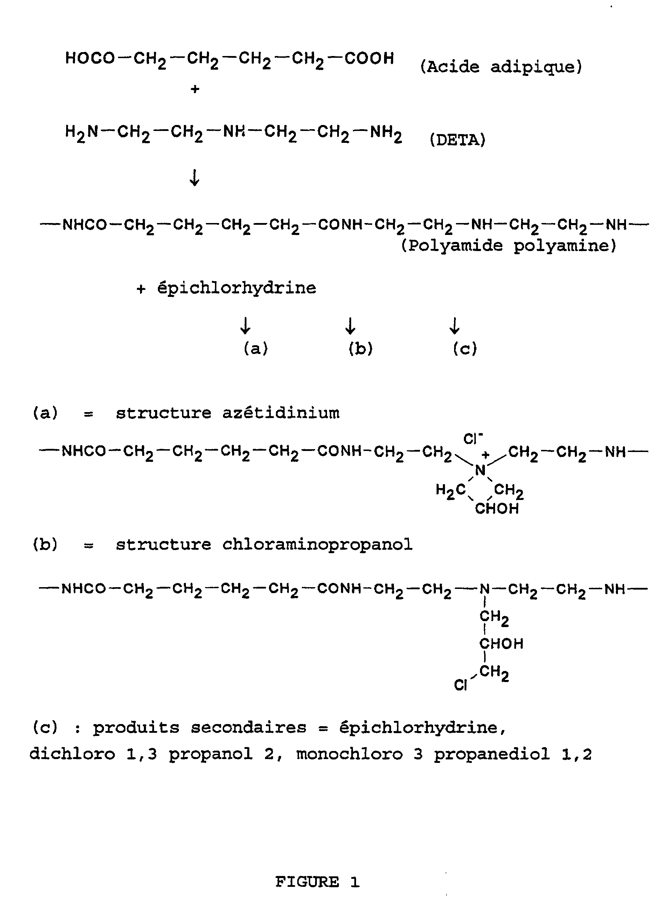

Les réactions d'obtention de la résine polyamide-polyamine-épichlorhydrine (PAE) ont été résumées sur la figure 1. L'épichlorhydrine réagit sur les azotes amines secondaires, probablement aussi primaires, en refermant ici des groupes azétidiniums, là en fixant des groupes chlorhydroxypropane, la résine PAE étant une molécule oligomère portant en répartition aléatoire de tels groupes azétidiniums à chlore minéral, et des groupes latéraux à chlore organique. La réaction d'alkylation de la PA par l'épichlorhydrine n'est pas totale. En fin de réaction, il reste quelques centaines de ppm d'épichlorhydrine fibre, dont une partie s'hydrolyse en milieu aqueux, principalement en dichloro-1,3-propanol-2 (DCP) et aussi en monochloro-3-propanediol-1,2 (MCPD), produits de faible masse moléculaire. Ces produits sont des AOX. Le DPC est reconnu comme toxique et mutagène. Le MCPD est également reconnu toxique et l'on craint qu'il ne soit aussi mutagène. Leur présence dans les produits pour traitement des papiers et dans les eaux résiduaires de papeterie constitue ainsi un problème très préoccupant Leur dosage est aisément réalisé par analyse chromatographique en phase gazeuse sur colonne superwax avec phase polyéthylèneglycol avec détection à ionisation de flamme.

Afin de résoudre le problème des AOX, les principaux fournisseurs de résine PAE ont développé de nouvelles résines à taux réduit d'AOX et de chlore organique (par exemple US 4,857,586 ou EP 540.943, de Bayer). On sait bien réduire le taux du DCP en synthèse jusqu'à environ 500 ppm. En dessous, la résine perd progressivement sa capacité de fonctionner comme additif de résistance humide du papier. Si bien que ces résines réputées ne présenter qu'un faible taux de dichloro-1,3-propanol-2 en contiennent néanmoins des quantités non négligeables, de l'ordre de quelques centaines de ppm, qui vont en partie rester dans le papier et en partie passer dans les eaux sous toile des papeteries. Tous ces organochlorés peuvent être des sources de contamination pour l'environnement (voir Devore David I., Clungeon Nancy S., Fischer, Stephen A., Tappi Journal 74, 12, 1991, 135-141 Henkel Corp.). Une solution qui semble s'imposer est le post traitement de la résine sur des adsorbants pour en extraire ces composés chlorés indésirables. La demande internationale WO 92/22.601 propose ainsi un post traitement sur résine échangeuse d'ions ; mais là encore, la résine épurée en DCP perd sensiblement ses qualités de résistance humide.

La demanderesse propose comme solution à ce problème non résolu, un procédé très efficace et très économique, qui est l'objet de la présente invention, pour produire une résine PAE ne contenant de produits organochlorés toxiques issus de la dégradation de l'épichlorhydrine qu'à l'état de traces ordinairement indécelables, par piégeage sélectif sur charbon actif du DPC et du MCPD présents et de l'EPC dans les résines PAE. La demande internationale WO 93/21.384 (E.I. Du Pont de Nemours and Co.) relate la possibilité de diminuer les produits secondaires issus de l'hydrolyse de l'épichlorhydrine en une seule percolation sur lit d'adsorbant, et de façon plus précise sur lit de résine échangeuse d'ions. On a constaté lors d'essais d'adsorption sur charbons actifs que le MCPD ne se piégeait pas en même temps que le DCP, probablement parce que le MCPD est déplacé sur le charbon par le DCP plus riche en chlore organique. Toujours est-il que l'on peut utiliser ce phénomène pour produire très économiquement une PAE selon le procédé selon l'invention, qui consiste en une percolation en deux étapes, la première consistant à passer une résine brute sur colonne de charbon en arrêtant la percolation dès qu'apparaît le DCP dans la PAE sortant de la colonne, et la seconde à passer cette résine PAE sans DCP sur une colonne de charbon vierge pour en éliminer le MCPD.

En pratique, on part d'une PAE sous la forme d'une solution aqueuse à extrait sec compris entre 2 et 60%, et dont la teneur en DCP exprimée par rapport à la résine sèche n'est pas supérieure à 80.000 ppm, préférentiellement comprise entre 500 et 80.000 ppm, sur une première colonne de charbon actif en arrêtant la percolation quand le DCP apparaît dans la résine sortante. Les résines issues de cette première percolation ont une teneur globale en DCP, exprimée par rapport à la résine sèche, jamais supérieure à 500 ppm, mais des teneurs en MCPD exprimées de la même façon, qui sont comprises entre 250 et 40.000 ppm. On obtient à ce niveau des résultats convenables en travaillant avec des rapports poids de résine industrielle sur poids de charbon actif utilisé de l'ordre de 20 (de l'ordre de 2,5 si on exprime la résine en extrait sec). Ces résines subissant une seconde percolation sur colonne de charbon vierge. On arrête cette percolation quand le MCPD apparaît dans la résine sortante. On atteint très aisément une teneur globale en MCPD qui ne sera jamais supérieure à 250 ppm, en travaillant avec des rapports poids de résine industrielle sur poids de charbon utilisé de l'ordre de 40 (de l'ordre de 5 si on exprime la résine en extrait sec).

Les résines PAE que l'on obtient ainsi ont des teneurs très basses en DCP et MCPD, ainsi qu'en EPC. Il est possible d'en faire avec des teneurs en DCP pratiquement nulles pour certains usages particuliers, par exemple pour les papiers filtres pour préparation du café. On constate que de façon étonnante, le charbon actif n'en a pas extrait le chlore organique, celui que l'on attribue aux branchements latéraux chlorhydroxypropane de ta molécule de PAE. On peut supposer que ces composants de la PAE responsables des quelques 3.000 ppm de chlore organique préservées sont porteurs pour une part non négligeable de l'efficacité du produit comme additif de résistance humide, et qu'il n'est pas souhaitable de les éliminer de compositions de traitement de papier pour des raisons de respect des normes d'AOX, d'autant plus que ces produits sont fixés sur les fibres de cellulose et ne contribuent justement pas à la teneur en AOX des eaux de rejets. Une conséquence inattendue et inexpliquée est que non seulement les résines traitées selon l'invention ne perdent pas de leur capacité à conférer une résistance humide au papier, mais encore qu'on enregistre jusqu'à 10 % de gain de résistance humide sur les papiers traités avec lesdites résines.

Les charbons utiles pour l'invention sont d'une façon très générale ceux qui sont préconisés pour la décoloration et la purification des solutions aqueuses, avec un indice d'iode (selon norme ASTM D 4607-86) d'au moins 500 mg/g, préférentiellement supérieur à 900 mg/g.

Le procédé selon l'invention ne fabrique pas globalement de DCP ou autres produits toxiques. Alors que d'autres procédés ne font que concentrer ces produits dans l'adsorbant et que le problème demeure de leur élimination, le charbon actif, parce qu'il se détruit ou se régénère à haute température, les transforme en eau, CO₂ et HCI éliminable sans danger.

Les compositions pour traitement du papier destinées à lui conférer une résistance humide comportant essentiellement une résine PAE aqueuse telle qu'on peut l'obtenir par le procédé selon l'invention, avec des extraits secs compris entre 2 et 60%, dont la teneur en DCP rapportée à son extrait sec est non mesurable par chromatographie en phase vapeur dont la teneur en MCPD n'est pas supérieure à 250 ppm et dont la teneur en chlore organique, également rapportée à leur extrait sec, n'est pas inférieure à 1% sont également un objet de la présente invention. Elles sont particulièrement appréciées pour la confection du papier à utilisation médicale, cosmétique ou à contact alimentaire, ou de papiers photographiques. Elles sont également un objet de l'invention.

### EXEMPLES

### Exemple 1

On passe une résine industrielle R4948 de CECA S.A., dont les caractéristiques figurent ci-après, sur une colonne de charbon contenant 220 g de charbon granulé d'indice d'iode 1.000 (CECARBONE 12x40 de ELF ATOCHEM N.A.), préalablement saturée d'eau. On a recueilli successivement trente cinq échantillons de 100 g chacun de résine filtrée au bas de la colonne. Les résultats sur l'épichlorhydrine (EPC), le DCP et le MCPD sont présentés dans le tableau ci-dessous.

| Volume percolé | EPC ppm | DCP ppm | MCPD ppm | ES% |
|---|---|---|---|---|
| Résine initiale | 16 | 420 | 200 | 13,2 |
| Echantillon N°1 | <5 | <5 | <5 | 3,7 |
| (N°5) | <5 | <5 | 15 | 9,7 |
| (N°10) | <5 | <5 | 30 | 11,1 |
| (N°20) | <5 | <5 | 53 | 12,6 |
| (N°25) | <5 | <5 | 67 | 12,3 |
| (N°30) | <5 | 7 | 150 | 12,9 |
| (N°35) | <5 | 8 | 163 | 13 |

On constate que le MCPD sort très tôt (15 ppm dans l'échantillon n°5), alors que le DCP n'apparaît que de façon très tardive (7 ppm dans l'échantillon n°30) On constate également au passage que toute l'épichlorhydrine est fortement retenue. On a recueilli 3,5 kg de résine dont l'extrait sec global est de 11,3 %. Ses taux moyens d'EPC et de DCP sont inférieurs à 5 ppm et son taux de MCPD est de 60 ppm. Le rendement en résine industrielle est de 15,9 % (1,8 en résine sèche) sur poids de charbon sec.

### Exemple 2

Dans un absorbeur à charbon actif d'un volume de 200 litres, on charge 100 kg de charbon actif (CECARBONE® 12x40). On sature d'eau, puis on passe une résine PAE dont les caractéristiques sont les suivantes : extrait sec 14 %, pH = 3,25, teneur en DCP 635 ppm, teneur en chlore minéral 1,58 %. Le réglage du débit a été fixé à 250 litres/heure, par application d'une pression qui a varié de 0,8 à 0,4 bar au cours de l'opération. Des échantillons sont prélevés tous les 100 litres et soumis à l'analyse chromatographique. Des traces de MCPD commencent à apparaître après sortie de 200 litres. Le DCP n'apparaît qu'après sortie de 2.000 litres. L'opération est arrêtée à 2.200 litres. On obtient une résine d'extrait sec moyen de 12,15%, pH = 3, DCP de 5,6 ppm, MCPD de 124 ppm, EPC inférieure à 5 ppm, chlore minéral = 1,42 %. Le rendement en résine industrielle est donc d'environ 22 par rapport au poids de charbon actif (2,7 de résine sèche).

### Exemple 3

A partir de la résine précédente à très faible taux de DCP, on réalise au laboratoire une seconde filtration sur charbon actif vierge. On a pu passer près de 8 kg de résine pour 220 g de charbon Cecarbone 12^{*}40, sans voir apparaître de MCPD. On obtient ainsi une résine d'extrait sec moyen de 11,6 %, pH = 2,9; DCP inférieur à 5 ppm, MCPD inférieur à 5 ppm. Avec cette seconde filtration, le rendement en résine à taux de DCP, MCPD et EPC pratiquement non détectables est d'environ 36 en résine industrielle par rapport au poids de charbon utilisé (4,2 si on exprime la résine en extrait sec).

### Exemple 4

On compare les compositions de résines aqueuses à environ 12 % d'extrait sec, non traitées, puis traitées selon l'art antérieur (WO 92/22601 - table II) ou selon l'invention (exemple précédent)

| Composants de la PAE | PAE sans traitement (ppm) | PAE traitée selon l'art antérieur (ppm) | | PAE traitée selon l'invention (ppm) |
|---|---|---|---|---|
| EPC | <100 | ? | ? | <5 |
| DCP | <1.000 | 25 | 13 | non dosable |
| MCPD | <1.000 | 163 | 104 | <30 |
| Cl (organique + minéral) | ≈ 13.000 | 875 | 330 | ≈ 12.500 |

Ces résultats s'interprètent ainsi : un traitement sur résine échangeuse d'ions élimine fortement, bien que non totalement, le DCP et analogues, en même temps que les composants chlorhydroxypropylés de la PAE. En revanche, le traitement selon la présente invention préserve le chlore organique et minéral du polymère, auquel on attribue une influence favorable sur la conservation des propriétés de résistance du papier, mais ramène la teneur en DCP et produits analogues à un niveau très faible voire indécelable selon les méthodes habituellement utilisées de chromatographie en phase gazeuse.

### Exemple 5

L'exemple est ici celui d'un essai industriel qui illustre l'impact des résines selon l'invention sur le taux d'AOX présent dans des eaux sous toile. Sur une pâte à papier à 10 grammes/litre, on ajoute 5 % de résine PAE. Le pH est ajusté à 7,5. Lors de la formation de la feuille de papier, on rassemble les eaux sous toile et on en détermine le taux d'AOX selon la norme DIN. On compare ainsi une résine de qualité industrielle ordinaire dont les caractéristiques sont extrait sec moyen de 14 %, pH = 3, DCP < 1000 ppm, MCPD <1.000 ppm avec la résine PAE qui a subi le traitement selon l'invention et qui affiche les caractéristiques d'extrait sec moyen de 12,3 %, pH = 3, DCP indécelable et MCPD < 30 ppm.

On obtient les résultats suivants

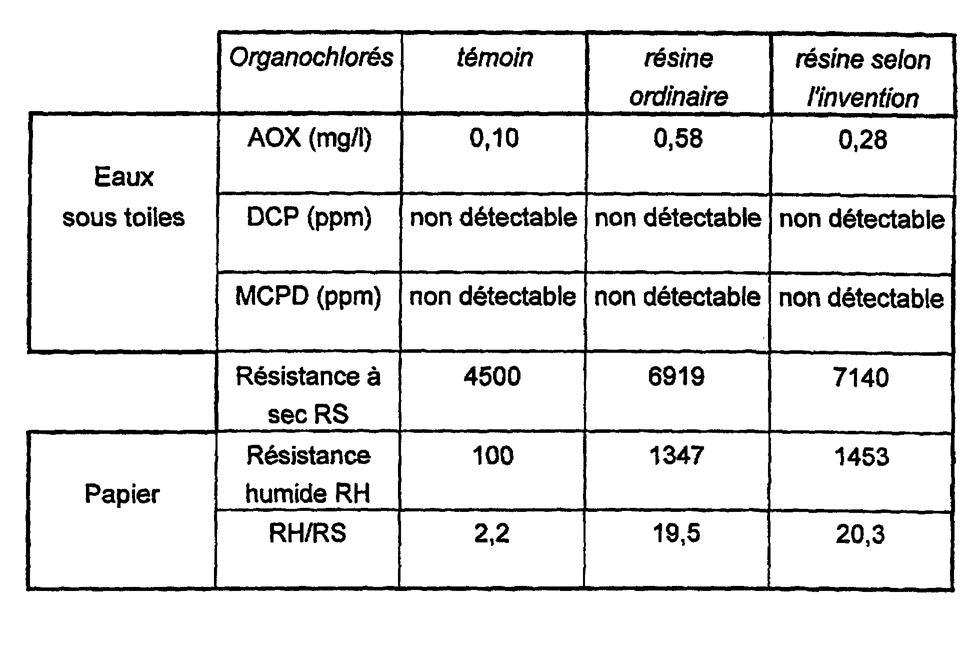

## Revendications

1. Procédé pour abaisser la teneur, en epichlorhydrine (EPC), en dichloro 1,3-propanol (DCP) et en monochloro-3-propanediol 1,2 (MCPD) de résines polyamidoamine-epichlorohydrine (PAE) caractérisé en ce que l'on fait passer des résines PAE aqueuses avec un extrait sec compris entre 2 et 60 % sur un premier lit de charbon actif jusqu'à ce que le DCP apparaisse dans le percolat, puis sur un second lit de charbon actif jusqu'à ce que le MCPD apparaisse dans le percolat.

2. Procédé selon la revendication 1, caractérisé en ce que le charbon actif est un charbon actif dont l'indice d'iode (mesuré selon la norme ASTM 4607-86) est supérieur à 500 mg/g, préférentiellement supérieur à 900 ppm.

3. Procédé selon la revendication 1 caractérisé en ce que les résines passées sur le charbon actif sont des PAE dont la teneur initiale en DCP comptée sur résine sèche est comprise entre 500 et 80.000 ppm.

4. Procédé selon la revendication 1 caractérisé en ce que les résines issues de la première percolation sont des PAE dont la teneur en MCPD comptée sur résine sèche est comprise entre 250 et 40.000 ppm.

5. Composition de traitement du papier, comportant essentiellement une résine PAE aqueuse dont l'extrait sec est compris entre 2 et 60 %, dont la teneur en DCP rapportée à son extrait sec est non mesurable par chromatographie en phase vapeur, dont la teneur en MCPD est inférieure à 250 ppm et dont la teneur en chlore organique, également rapportée à son extrait sec, n'est pas inférieure à 1 %.

6. Application des compositions selon la revendication 5 à la fabrication du papier à utilisation médicale, cosmétique ou à contact alimentaire ou de papiers photographiques.

## Patentansprüche

1. Verfahren zur Senkung des Epichlorhydrin- (EPC), 1,3-Dichlor-2-propanol- (DCP) und 3-Monochlor-1,2-propandiol-Gehalts (MCPD) von Polyaminoamid-Epichlorhydrin-Harzen (PAE-Harzen), dadurch gekennzeichnet, daß man wäßrige PAE-Harze mit einem Trockensubstanzgehalt von 2 bis 60 % durch ein erstes Aktivkohlebett hindurchfließen läßt, bis das DCP in dem Perkolat erscheint, wonach man die wäßrigen PAE-Harze durch ein zweites Aktivkohlebett hindurchfließen läßt, bis das MCPD in dem Perkolat erscheint.

2. Verfahren nach Anspruch 1, dadurch gekennzeichnet, daß die Aktivkohle eine Aktivkohle ist, deren Iodzahl (gemessen nach der ASTM-Norm 4607-86) größer als 500 mg/g, vorzugsweise größer als 900 ppm, ist.

3. Verfahren nach Anspruch 1, dadurch gekennzeichnet, daß die Harze, die durch die Aktivkohle hindurchgesickert sind, PAE-Harze sind, deren anfänglicher Gehalt an DCP, berechnet für das trockene Harz, im Bereich von 500 bis 80000 ppm liegt.

4. Verfahren nach Anspruch 1, dadurch gekennzeichnet, daß die Harze, die nach der ersten Perkolation erhalten werden, PAE-Harze sind, deren MCPD-Gehalt, berechnet für das trockene Harz, im Bereich von 250 bis 40000 ppm liegt.

5. Zusammensetzung für die Papierbehandlung, die im wesentlichen ein wäßriges PAE-Harz umfaßt, dessen Trockensubstanzgehalt im Bereich von 2 bis 60 % liegt, dessen DCP-Gehalt, bezogen auf die Trockensubstanz, durch Gaschromatographie nicht meßbar ist, dessen MCPD-Gehalt kleiner als 250 ppm ist und dessen Gehalt an organischem Chlor, ebenfalls bezogen auf die Trockensubstanz, nicht kleiner als 1 % ist.

6. Verwendung der Zusammensetzungen nach Anspruch 5 für die Herstellung von Papier zur medizinischen oder kosmetischen Verwendung, von Papier, das mit Lebensmitteln in Kontakt kommt, und von photographischen Papieren.

## Claims

1. Process for lowering the content of epichlorohydrin (EPC), of 1,3-dichloropropanol (DCP) and of 3-monochloro-1,2-propanediol (MCPD) in polyamidoamine-epichlorohydrin (PAE) resins, characterized in that aqueous PAE resins with a solids content of between 2 and 60% are passed over a first bed of active charcoal until the DCP appears in the percolate and then over a second bed of active charcoal until the MCPD appears in the percolate.

2. Process according to Claim 1, characterized in that the active charcoal is an active charcoal with an iodine number (measured according to ASTM Standard 4607-86) of greater than 500 mg/g, preferably of greater than 900 mg/g.

3. Process according to Claim 1, characterized in that the resins passed over the active charcoal are PAE resins with an initial DCP content, with respect to dry resin, of between 500 and 80 000 ppm.

4. Process according to Claim 1, characterized in that the resins resulting from the first percolation are PAE resins with an MCPD content, with respect to dry resin, of between 250 and 40 000 ppm.

5. Composition for the treatment of paper, essentially comprising an aqueous PAE resin with a solids content of between 2 and 60%, the DCP content of which, with respect to its solids content, cannot be measured by gas chromatography, the MCPD content of which is less than 250 ppm and the organic chlorine content of which, also with respect to its solids content, is not less than 1%.

6. Application of the compositions according to Claim 5 in the manufacture of paper for medical or cosmetic use or for contact with food or of photographic paper.
